# EUROPÄISCHE PATENTSCHRIFT

(11) **EP 2 772 977 B1**
(45) Veröffentlichungstag und Bekanntmachung des Hinweises auf die Patenterteilung: **03.05.2017**
(21) Anmeldenummer: 13156999.8
(22) Anmeldetag: 27.02.2013
(51) Int. Cl.: H01M 8/18, H01M 8/04, H01M 8/06, C25B 11/04, C25B 1/04, H01M 4/86, H01M 8/08

(54) **Regeneratives Brennstoffzellensystem mit Gasreinigung**
Regenerative fuel cell system with gas purification
Système régénératif de piles à combustible avec purification de gaz

(43) Veröffentlichungstag der Anmeldung: 03.09.2014
(73) Patentinhaber: Airbus DS GmbH, 82024 Taufkirchen (DE)
(72) Erfinder: Markgraf, Sebastian, 88090 Immenstaad (DE); Jehle, Walter, 88263 Horgenzell (DE); Raatschen, Dr. Willigert, 88090 Immenstaad (DE); Lucas, Joachim, 88634 Herdwangen, Schönach (DE)
(74) Vertreter: Daub, Thomas

(56) Entgegenhaltungen:
- EP-A1- 1 674 424
- CA-A1- 1 198 710
- DE-A1-102007 027 720
- US-A1- 2002 119 365
- US-A1- 2008 213 635
- US-A1- 2009 008 261

## Beschreibung

### Stand der Technik

Die Erfindung betrifft eine Redox-Vorrichtung gemäß Anspruch 1. Redox-Vorrichtungen mit zumindest einer als Brennstoffzelle oder Elektrolyseur ausgebildeten Redox-Einheit nach dem Stand der Technik werden nach einer Abschaltung mit einem inerten Spülgas, meistens mit Stickstoff, gespült, damit Restmengen an verwendeten Gasen wie Wasserstoff und Sauerstoff, die nach Abschaltung in Gasräumen der Redox-Einheit verbleiben, nicht durch Diffusion in Kontakt zueinander geraten und in der Redox-Einheit ein explosionsfähiges Gemisch, wie beispielsweise eine Knallgas-Mischung, bilden können, die durch Energieeintrag, insbesondere bei einer Wiederinbetriebnahme der Redox-Einheit, zur Explosion veranlasst werden kann, wodurch die Redox-Einheit beschädigt werden kann. Insbesondere bei den zur Zeit in Entwicklung befindlichen Redox-Vorrichtungen mit einer als Brennstoffzelle ausgebildeten Redox-Einheit und einer als Elektrolyseur ausgebildeten Redox-Einheit, die als sogenanntes "Regeneratives Brennstoffzellensystem" im geschlossenen Betrieb betrieben werden sollen, lässt sich aufgrund der zur Spülung mit inertem Spülgas notwendigen Öffnung des Systems dieses Verfahren zur Verhinderung einer Knallgasentstehung nicht verwenden.

Die Patentschriften US 2009/008261 und CA 1198710 beschreiben elektrochemische Sauerstoff-Generatoren, bei denen entstehender Wasserstoff mittels eines Rekombinationskatalysators unschädlich gemacht wird.

Die Patentschrift DE 102007027720 beschreibt ein stofflich gekoppeltes Brennstoffzellen-Elektrolyseur-Paar als Redox-Vorrichtung.

Die Aufgabe der Erfindung besteht insbesondere darin, eine Redox-Vorrichtung bereitzustellen, welche eine hohe Sicherheit gegenüber einer Knallgasgefährdung bietet, wobei die Knallgasgefährdung durch eine Verunreinigung des Sauerstoffgases durch Wasserstoffgas bzw. eine Verunreinigung des Wasserstoffgases durch Sauerstoffgas auftritt. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Redox-Vorrichtung, nach Anspruch 1. Unter einer "Redox-Einheit" soll eine Einheit mit zumindest zwei Elektroden, wovon vorzugsweise eine als eine Wasserstoffelektrode und eine als eine Sauerstoffelektrode ausgebildet ist, einem die zwei Elektroden verbindenden Stromkreis, zumindest einem zumindest zwischen den zwei Elektroden angeordneten Elektrolyt und/oder einer zumindest zwischen den zwei Elektroden angeordneten elektrolytgefüllten oder ionenleitenden Membran verstanden werden, wobei mittels der Einheit eine Redox-Reaktion durchgeführt wird, bei der unter Energieabgabe in Form von elektrischer Leistung, die über den Stromkreis abgegeben wird, das erste Gas oxidiert und das zweite Gas reduziert und in einer Reaktion zu einem Produktstoff, vorzugsweise Wasser, umgesetzt werden und in einer Reaktion zu einem Produktstoff, vorzugsweise Wasser, umgesetzt wird, welches in eine Umgebung oder einen Speichertank abgeben wird, oder bei der unter Aufwendung von Energie in Form elektrischer Leistung ein Eduktstoff, vorzugsweise Wasser, zu einer Erzeugung von einem ersten Gas, vorzugsweise molekularem Wasserstoff, und einem zweiten Gas, vorzugsweise molekularem Sauerstoff, gespalten wird und das erste Gas und das zweite Gas in die Umgebung oder in Speichertanks abgeführt werden. Insbesondere ist die Redox-Einheit als eine Brennstoffzelle, bei der unter Energieabgabe durch Stromerzeugung molekularer Wasserstoff, vorzugsweise in Form von Wasserstoffgas, und molekularer Sauerstoff, vorzugsweise in Form von Sauerstoffgas, zu Wasser reagieren, und/oder als ein Elektrolyseur für Wasserstoff und Sauerstoff, bei dem unter Energieaufnahme durch einen elektrischen Strom Wasser in molekularen Sauerstoff und molekularen Wasserstoff gespalten wird, ausgebildet. Grundsätzlich kann anstelle von Wasser als Produktstoff oder Eduktstoff ein anderer chemischer Stoff, welcher Wasserstoffatome und Sauerstoffatome enthält, verwendet werden. Beispielsweise kann die Redox-Einheit anstatt als Wasserstoff-Sauerstoff-Redox-Einheit als eine Redox-Einheit für andere Stoffe, die die anderen Stoffe in einer zu der Redoxreaktion der Wasserstoff-Sauerstoff-Redox-Einheit ähnlichen Redoxreaktion umsetzt, ausgebildet sein, beispielsweise als eine Kohlenmonoxid-Sauerstoff-Redox-Einheit, die Kohlenmonoxid und Sauerstoffgas zu Kohlendioxid umsetzt oder Kohlendioxid in Kohlenmonoxid und Sauerstoffgas spaltet. Unter einer "Redoxreaktion" soll insbesondere eine Reaktion verstanden werden, bei der zumindest zwei chemische Stoffe miteinander reagieren, wobei zumindest ein chemischer Stoff Elektronen abgibt und somit oxidiert wird, und zumindest ein chemischer Stoff Elektronen aufnimmt und somit reduziert wird. Unter "Wasserstoffgas" soll insbesondere Wasserstoff in molekularer Form, der als Gas vorliegt, verstanden werden. Unter "Sauerstoffgas" soll insbesondere Sauerstoff in molekularer Form, der als Gas vorliegt, verstanden werden.Die Redox-Vorrichtung ist als ein sogenanntes Regeneratives Brennstoffzellsystem ausgebildet das zumindest eine Brennstoffzelle und zumindest einen an die zumindest eine Brennstoffzelle gekoppelten Elektrolyseur für Wasserstoff und Sauerstoff aufweist, wobei in einem Aufladevorgang zu einer Energiespeicherung in dem Regenerativen Brennstoffzellsystem mittels eines angelegten äußeren elektrischen Stroms der zumindest eine Elektrolyseur für Wasserstoff und Sauerstoff Wasser aus einem Wasservorrat in molekularen Wasserstoff und molekularen Sauerstoff spaltet, wobei der molekulare Wasserstoff und der molekulare Sauerstoff jeweils in Speichertanks abgeführt wird und in einem Entladevorgang zu einer Energieabgabe über elektrischen Strom molekularer Wasserstoff und molekularer Sauerstoff in der zumindest einen Brennstoffzelle zu Wasser reagieren. Das regenerative Brennstoffzellsystem erfüllt somit eine Funktion eines Akkumulators. Insbesondere kann das regenerative Brennstoffzellsystem für einen geschlossenen Betrieb ausgebildet sein. Unter einem "geschlossenen Betrieb" soll insbesondere ein Betrieb verstanden werden, bei dem das Regenerative Brennstoffzellsystem über eine Vielzahl von Auflade-Entlade-Zyklen ohne Stoffaustausch mit einer Umgebung betrieben wird. Unter einem "Betrieb ohne Stoffaustausch mit der Umgebung" soll insbesondere verstanden werden, dass das regenerative Brennstoffzellsystem mit einem Anfangsvorrat von Wasser und/oder molekularem Sauerstoff und/oder molekularem Wasserstoff in Speichertanks ausgestattet ist, wobei über die Vielzahl von Auflade-Entlade-Zyklen lediglich der Anfangsvorrat an Wasser und/oder molekularem Sauerstoff und/oder molekularem Wasserstoff umgesetzt wird und eine Ergänzung des Anfangsvorrats nicht stattfindet. Insbesondere ist bei einem Betrieb ohne Stoffaustausch mit der Umgebung eine Entnahme der Speichertanks nicht vorgesehen. Unter einem "Elektrolyten" soll insbesondere ein ionenleitender Stoff, vorzugsweise in Form einer Lösung, beispielsweise einer alkalischen Lösung, verstanden werden. Unter einer "Gasreinigungseinheit" soll insbesondere eine Einheit verstanden werden, die ein Gas von Verunreinigungen, insbesondere von Feststoffen oder Fremdgasen, beispielsweise durch Filtern oder eine Umwandlung des Fremdgases in eine flüssige oder feste Form, wobei zu der Umwandlung eine chemische Reaktion verwendet werden kann, reinigt. Vorzugsweise ist die Gasreinigungseinheit zu einer Reinigung des Wasserstoffgases von Verunreinigungen durch Sauerstoffgas und/oder des Sauerstoffgases von Verunreinigungen durch Wasserstoffgas zumindest teilweise an und/oder in einem Gasraum einer Redox-Einheit und insbesondere besonders bevorzugt innerhalb eines von Zellwandungen umgebenen Innenbereichs der Redox-Einheit angeordnet. Es kann insbesondere eine Redox-Vorrichtung mit einer hohen Betriebssicherheit und einem verminderten operativen Aufwand durch Einsparung eines Vorrats an inertem Spülgas und eines Durchlaufs von inertem Spülgas erreicht werden.Die zumindest eine Redox-Einheit ist als eine Brennstoffzelle ausgebildet Es kann insbesondere eine Brennstoffzelle mit einer hohen Betriebssicherheit und einem verminderten operativen Aufwand durch Einsparung eines Vorrats an inertem Spülgas und eines Durchlaufs von inertem Spülgas erreicht werden.

Ferner wird vorgeschlagen, dass die Brennstoffzelle als alkalische Brennstoffzelle ausgebildet ist. Unter einer "alkalischen Brennstoffzelle" soll insbesondere eine Brennstoffzelle verstanden werden, welche eine alkalische Lösung, insbesondere eine Kaliumhydroxid-Lösung, als Elektrolyt verwendet. Eine Verwendung anderer alkalischer Lösungen als Elektrolyt, beispielsweise Hydrazin, ist ebenfalls möglich. Vorzugsweise bestehen die Wasserstoffelektrode und die Sauerstoffelektrode zumindest teilweise aus Nickel. Es kann insbesondere eine alkalische Brennstoffzelle mit einer hohen Betriebssicherheit und einem verminderten operativen Aufwand durch Einsparung eines Vorrats an inertem Spülgas und eines Durchlaufs von inertem Spülgas erreicht werden. Die zumindest eine Redox-Einheit ist als Elektrolyseur zur Erzeugung von Wasserstoffgas und/oder Sauerstoffgas ausgebildet. Insbesondere ist der Elektrolyseur als alkalischer Elektrolyseur, welcher eine alkalische Lösung, insbesondere eine Kaliumhydroxid-Lösung, als Elektrolyt verwendet, ausgebildet. Es kann insbesondere ein Elektrolyseur zur Erzeugung von Wasserstoffgas und/oder Sauerstoffgas mit einer hohen Betriebssicherheit und einem verminderten apparativen Aufwand durch Einsparung eines Vorrats an inertem Spülgas und eines Durchlaufs von inertem Spülgas erreicht werden.

Ferner wird vorgeschlagen, dass die zumindest eine Gasreinigungseinheit zumindest eine Rekombinationskatalysatoreinheit zur Rekombination von Sauerstoffgas und Wasserstoffgas zu Wasser umfasst. Unter einer "Rekombinationskatalysatoreinheit" soll insbesondere eine Einheit verstanden werden, die dazu vorgesehen ist, an einer vorgesehenen Stelle eine Rekombination von Wasserstoff und Sauerstoff zu katalysieren. Insbesondere stellt die Rekombinationskatalysatoreinheit zumindest eine Oberfläche zur Verfügung, an dem molekularer Wasserstoff und molekularer Sauerstoff zu Wasser reagieren können. Insbesondere ist die Rekombinationskatalysatoreinheit zumindest teilweise an und/oder in einem Gasraum einer Redox-Einheit und insbesondere besonders bevorzugt innerhalb eines von Wandungen umgebenen Innenbereichs der Redox-Einheit angeordnet. Insbesondere ist die Rekombinationskatalysatoreinheit zumindest teilweise innerhalb eines Gasstroms von einem Gasspeicher zu einer Reaktionszone der Redox-Einheit und/oder von einer innerhalb der Redox-Einheit, bevorzugt innerhalb des von Wandungen umgebenen Innenbereichs der Redox-Einheit, angeordnet. Unter einer "Reaktionszone" soll insbesondere ein Kontaktbereich zwischen der Wasserstoffelektrode und dem Elektrolyten und/oder der Membran oder zwischen der Sauerstoffelektrode und dem Elektrolyten und/oder der Membran verstanden werden, an der Wasser in Wasserstoff und/oder Sauerstoff gespalten wird oder Wasserstoff und Sauerstoff zu Wasser synthetisiert werden. Es kann insbesondere eine Gasreinigungseinheit erreicht werden, die einen geringen apparativen Aufwand erfordert.

Des Weiteren wird vorgeschlagen, dass die Rekombinationskatalysatoreinheit zumindest ein Katalysatorelement aufweist, das zumindest teilweise aus einem Platinmetall besteht. Insbesondere weist das zumindest eine Katalysatorelement zumindest teilweise eine Beschichtung mit einem Platinmetall auf zumindest einer Oberfläche auf. Grundsätzlich kann das zumindest eine Katalysatorelement auch vollständig aus einem und/oder aus mehreren Platinmetallen bestehen. Unter einem "Platinmetall" soll insbesondere Platin oder andere Edelmetalle verstanden werden, die sich chemisch ähnlich wie Platin verhalten, insbesondere die Metalle Ruthenium, Rhodium, Palladium, Osmium und Iridium. Insbesondere sind Nickel und Darmstadtium als Elemente der sogenannten Platingruppe verschieden von Platinmetallen. Es kann insbesondere ein chemisch resistentes Katalysatorelement mit einer hohen Katalyseleistung erreicht werden. Das zumindest eine Katalysatorelement ist als eine auf einer einer Reaktionszone abgewandten Seite zumindest einer Elektrode der zumindest einen Redox-Einheit aufgebrachte Katalysatorschicht ausgebildet. Unter einer "Reaktionszone" soll insbesondere ein Bereich der zumindest einen Elektrode verstanden werden, an dem eine Umsetzung von Wasserstoff und Sauerstoff zu Wassermolekülen und/oder eine elektrolytische Spaltung von Wassermolekülen in Wasserstoff und Sauerstoff stattfindet. Insbesondere ist die auf der der Reaktionszone abgewandten Seite zumindest einer Elektrode der zumindest einen Redox-Einheit aufgebrachten Katalysatorschicht verschieden von einer Katalysatorschicht der zumindest einen Elektrode, die eine Redoxreaktion der zumindest einen Redox-Einheit katalysiert. Insbesondere ist eine Aufbringung der Katalysatorschicht auf der einer Reaktionszone abgewandten Seite zumindest einer Elektrode speziell dazu vorgesehen, aus der Reaktionszone entweichendes Sauerstoffgas, das in einen von der Reaktionszone getrennten Gasraum mit Wasserstoffgas eindringt und dort eine Knallgasgefährdung darstellt, und/oder Wasserstoffgas, das in einen von der Reaktionszone getrennten Gasraum mit Sauerstoffgas eindringt und dort eine Knallgasgefährdung darstellt, bei einem Eintritt und/oder Aufenthalt in dem Gasraum durch katalysierte Rekombination zu Wasser zu entfernen, was durch eine Katalysatorschicht in der Reaktionszone nicht erreicht werden kann. Es kann insbesondere eine Gasreinigungseinheit erreicht werden, die eine vorteilhaft nahe Anordnung an einer Entstehungszone von Wasserstoffgas oder Sauerstoffgas und/oder an einer Eintrittszone in einen Reaktionsbereich aufweist und eine hohe Betriebssicherheit der Redox-Vorrichtung erreicht.

In einer Weiterbildung der Erfindung wird vorgeschlagen, dass das zumindest eine Katalysatorelement eine Hohlraumstruktur aufweist. Unter einer "Hohlraumstruktur" soll insbesondere eine Struktur verstanden werden, die zumindest einen Hohlraum, vorzugsweise eine Vielzahl von Hohlräumen aufweist, durch den oder durch die Gase von einer Seite der Struktur zu einer anderen Seite der Struktur diffundieren und/oder strömen können. Insbesondere ist die Vielzahl von Hohlräumen von Poren gebildet. Das eine Hohlraumstruktur aufweisende Katalysatorelement kann grundsätzlich auch als Kanäle ausgebildete Hohlräume und/oder eine Gitternetzstruktur aufweisen. Besonders bevorzugt sind innere Oberflächen der Hohlräume mit einer katalytischen Beschichtung aus einem Platinmetall versehen. Es kann insbesondere ein Katalysatorelement mit einem hohen Anteil einer katalytisch wirksamen Oberfläche und somit einer hohen Reinigungsleistung erreicht werden.

Des Weiteren wird vorgeschlagen, dass das zumindest eine Katalysatorelement an einem Gasraum der zumindest einen Redox-Einheit, der an zumindest eine Elektrode der zumindest einen Redox-Einheit angrenzt, angeordnet ist. Unter einem "Gasraum einer Redox-Einheit" soll insbesondere ein Raum der Redox-Einheit verstanden werden, der durch eine Außenwand der Redox-Einheit, Öffnungen in der Außenwand zu einer Zu- oder Ableitung von Produktstoffen und/oder Eduktstoffen, insbesondere von Wasserstoffgas und/oder Sauerstoffgas, und die Wasserstoffelektrode oder die Sauerstoffelektrode, begrenzt ist. Es kann insbesondere eine vorteilhaft nahe Anordnung des zumindest einen Katalysatorelements zu einer Reaktionszone und zu entstehenden und/oder in die Reaktionszone eintretenden Gasen erreicht werden.Die Redox-Vorrichtung weist zumindest eine weitere Redox-Einheit, die mit der zumindest einen Redox-Einheit stofflich gekoppelt ist, auf Unter "gekoppelt" soll insbesondere verstanden werden, dass Produktstoffe der zumindest einen Redox-Einheit als Eduktstoffe der zumindest einen weiteren Redox-Einheit genutzt werden und Produktstoffe der zumindest einen weiteren Redox-Einheit als Eduktstoffe der einen weiteren Redox-Einheit genutzt werden und/oder dass die zumindest eine Redox-Einheit und die zumindest eine weitere Redox-Einheit einen gemeinsamen Eduktvorrat und/oder Produktvorrat aufweisen und ein Strom von Eduktstoffen in mehreren gleichartig ausgebildeten Redox-Einheiten geführt wird. Es kann insbesondere eine Nutzung nicht vollständig umgesetzter Eduktstoffe erreicht oder ein regeneratives Brennstoffzellensystem bereitgestellt werden.Erfindungsgemäß sind die zumindest eine Redox-Einheit und die zumindest eine weitere Redox-Einheit als ein Brennstoffzellen-Elektrolyseur-Paar ausgebildet Insbesondere bilden die zumindest eine Redox-Einheit und die zumindest eine weitere Redox-Einheit somit ein regeneratives Brennstoffzellsystem. Es kann insbesondere eine Akkumulatorfunktion der Redox-Vorrichtung erreicht werden.

Des Weiteren wird vorgeschlagen, dass zumindest ein Gasstrom von der zumindest einen Redox-Einheit zu der zumindest einen weiteren Redox-Einheit oder von der zumindest einen weiteren Redox-Einheit zu der zumindest einen Redox-Einheit vor einem Verlassen der zumindest einen Redox-Einheit oder der zumindest einen weiteren Redox-Einheit mittels der zumindest einen Gasreinigungseinheit gereinigt wird. Unter einem "Verlassen einer Redox-Einheit" soll insbesondere ein Austreten aus einem Gasraum, vorzugsweise einem von einem Zellrahmen der Redox-Einheit umschlossenen Gasraum, in eine Leitung, die vorzugsweise zu einem Speichertank führt oder überschüssige, unreagierte Eduktgase wieder in eine Eingangsleitung in den Gasraum zurückführt, verstanden werden. Unter einer "Reinigung vor einem Verlassen einer Redox-Einheit" soll insbesondere verstanden werden, dass die Verunreinigungen durch Fremd- und Restgase innerhalb eines Gasraums der Redox-Einheit, vorzugsweise bei einem Eintritt in den Gasraum, durch die Gasreinigungseinheit beseitigt werden. Es kann insbesondere eine hohe Betriebssicherheit erreicht werden. Weiterhin wird vorgeschlagen, dass zumindest ein Gasstrom von der zumindest einen Redox-Einheit zu der zumindest einen weiteren Redox-Einheit oder von der zumindest einen weiteren Redox-Einheit zu der zumindest einen Redox-Einheit bei einem Verlassen der zumindest einen Redox-Einheit oder der zumindest einen weiteren Redox-Einheit mittels der zumindest einen Gasreinigungseinheit gereinigt wird. Unter einer "Reinigung bei einem Verlassen einer Redox-Einheit" soll insbesondere verstanden werden, dass zumindest ein Element der Gasreinigungseinheit in einem Übergangsbereich von dem Gasraum zu einer zu einem Speichertank führenden Leitung angeordnet ist. Es kann insbesondere eine hohe Betriebssicherheit erreicht werden.

### Zeichnungen

Weitere Vorteile ergeben sich aus der folgenden Zeichnungsbeschreibung. In den Zeichnungen sind sechs Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen. Es zeigen:
- Fig. 1: eine Redox-Vorrichtung mit einer als alkalische Brennstoffzelle ausgebildeten Redox-Einheit und mit einer Gasreinigungseinheit, die eine Rekombinationskatalysatoreinheit mit Katalysatorelementen, die als eine auf einer Reaktionszone abgewandten Seite von Elektroden aufgebrachte Katalysatorschicht ausgebildet sind, aufweist,
- Fig. 2: eine alternative Redox-Vorrichtung mit einer als Elektrolyseur ausgebildeten Redox-Einheit und mit einer Gasreinigungseinheit, die wie im vorhergehenden Ausführungsbeispiel ausgeführt ist,
- Fig. 3: eine weitere Redox-Vorrichtung mit einer als alkalische Brennstoffzelle ausgebildeten Redox-Einheit und mit einer Gasreinigungseinheit, die eine Rekombinationskatalysatoreinheit mit Katalysatorelementen, die in einem Ablauf eines Gasraums angeordnet sind,
- Fig. 4: eine weitere Redox-Vorrichtung mit einer als Elektrolyseur ausgebildeten Redox-Einheit und mit einer Gasreinigungseinheit, die wie im vorhergehenden Ausführungsbeispiel ausgeführt ist,
- Fig. 5: eine erfindungsgemäße Redox-Vorrichtung mit einer als alkalische Brennstoffzelle ausgebildeten Redox-Einheit, einer als Elektrolyseur ausgebildeten Redox-Einheit, die mit der alkalischen Brennstoffzelle stofflich gekoppelt ist, und mit einer Gasreinigungseinheit, die wie in Fig. 1 und Fig. 2 ausgeführt ist, und
- Fig. 6: eine weitere erfindungsgemäße Redox-Vorrichtung mit einer als alkalische Brennstoffzelle ausgebildeten Redox-Einheit, einer als Elektrolyseur ausgebildeten Redox-Einheit, die mit der alkalischen Brennstoffzelle stofflich gekoppelt ist, und mit einer Gasreinigungseinheit, die wie in Fig. 3 und Fig. 4 ausgeführt ist.

### Beschreibung der Ausführungsbeispiele

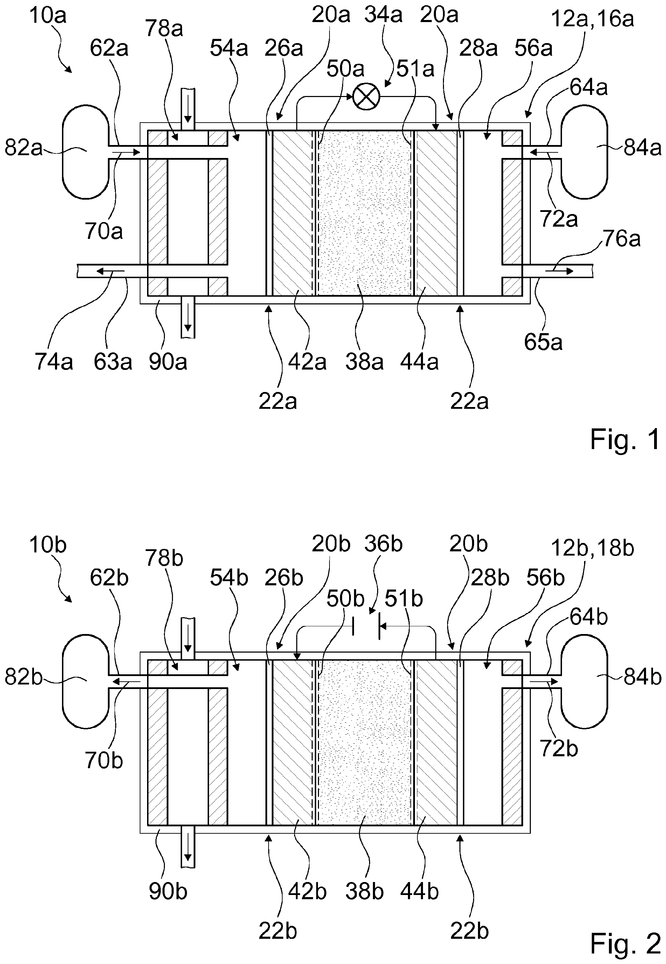

Fig. 1 zeigt eine als Wasserstoff-Sauerstoff-Redox-Vorrichtung ausgebildete, Redox-Vorrichtung 10a mit einer als Wasserstoff-Sauerstoff-Redox-Einheit ausgebildete Redox-Einheit 12a, die zur Durchführung zumindest einer Redoxreaktion unter Verbrauch von Wasserstoffgas als ein erstes Gas und Sauerstoffgas als ein zweites Gas vorsieht, und umfasst eine als Wasserstoffelektrode ausgebildete Elektrode 42a, eine als Sauerstoffelektrode ausgebildete Elektrode 44a und eine dazwischen angeordnete, elektrolytgefüllte Membran 38a. Die Elektroden 42a, 44a sind als Nickelelektroden ausgeführt. Die Redox-Einheit 12a ist als eine Brennstoffzelle 16a, und zwar als eine alkalische Brennstoffzelle 16a, ausgeführt, in der ein Elektrolyt, mit dem die Membran 38a gefüllt ist, von einer Kaliumhydroxidlösung gebildet ist. In der Brennstoffzelle 16a wird mittels einer Redoxreaktion an den Elektroden 42a, 44a Wasserstoffgas und Sauerstoffgas zu Wasser reagiert, wobei Energie in Form von elektrischem Strom frei wird, der über einen Stromverbraucher 34a, der in einem Stromkreis zwischen den Elektroden 42a, 44a angeordnet ist, fließt. Eine Schließung des Stromkreises wird durch einen Ladungstransport über die elektrolytgefüllte Membran 38a erreicht. Die Brennstoffzelle 16a wird bei einer Betriebstemperatur in einem Temperaturbereich von 80 bis 200 Grad Celsius betrieben. Um die Brennstoffzelle 16a auf Betriebstemperatur zu erwärmen, weist die Brennstoffzelle 16a eine Heizeinheit 78a auf, in der Flüssigkeit zum Wärmetransport fließt. Über die Heizeinheit 78a kann ferner Reaktionswärme, die bei einem Betrieb der Brennstoffzelle 16a entsteht, abtransportiert werden, um eine Überhitzung der Brennstoffzelle 16a zu vermeiden.

Die Redox-Vorrichtung 10a weist einen mit der als alkalische Brennstoffzelle 16a ausgebildeten Redox-Einheit 12a über eine Leitung 62a verbundenen Gasspeicher 82a mit einem Vorrat an Wasserstoffgas und einen mit der Brennstoffzelle 16a über eine Leitung 64a verbundenen Gasspeicher 84a mit einem Vorrat an Sauerstoffgas auf. Als reine Gase liegen Wasserstoff und Sauerstoff in den Gasspeichern 82a, 84a in molekularer Form vor. Durch die Leitung 62a wird ein Gasstrom 70a von Wasserstoffgas von dem Gasspeicher 82a in einen durch einen Zellrahmen 90a der Redox-Einheit 12a und die als Wasserstoffelektrode ausgebildete Elektrode 42a begrenzten Gasraum 54a geleitet, von dem es durch die Elektrode 42a hindurch in eine Reaktionszone 50a gelangt, die von einer Kontaktzone von Membran 38a und Elektrode 42a gebildet ist. In der Reaktionszone 50a findet eine Redoxreaktion von Wasserstoffmolekülen des Wasserstoffgases mit Hydroxidionen zu Wasser statt, bei der Elektronen freiwerden, welche in einem elektrischen Strom über den Stromverbraucher 34a fließen und dabei Energie abgeben. Überschüssiges Wasserstoffgas wird in einem Gasstrom 74a über eine Leitung 63a abgeführt, wobei das überschüssige Wasserstoffgas erneut der Brennstoffzelle 16a zugeführt werden kann. Sauerstoffgas wird korrespondierend in einem Gasstrom 72a über die Leitung 64a in einen Gasraum 56a eingeführt und gelangt durch die Elektrode 44a in eine von einer Kontaktzone von Membran 38a und Elektrode 44a gebildete Reaktionszone 51a. In der Reaktionszone 51a wird das Sauerstoffgas zusammen mit Wasser, das beispielsweise aus der Kaliumhydroxidlösung stammt oder zuvor in der Brennstoffzelle 16a erzeugt wurde, in einer Redoxreaktion reduziert und unter Aufnahme von Elektronen zu Hydroxidionen umgesetzt. Eine Gesamtreaktion in den Reaktionszonen 50a, 51a produziert dabei Wasser, da in der Reaktionszone 50a mehr Wassermoleküle erzeugt werden als in der Reaktionszone 51a zusammen mit Sauerstoffgas zu Hydroxidionen umgesetzt werden. Überschüssiges Sauerstoffgas wird über eine Leitung 65a in einem Gasstrom 76a abgeführt. Entstehendes Wasser wird als Reaktionsprodukt in Form von Wasserdampf über die Gasströme 74a, 76a abgeführt.

Die Redox-Vorrichtung 10a weist eine Gasreinigungseinheit 20a zu einer Reinigung des Wasserstoffgases als erstes Gas von Verunreinigungen durch das Sauerstoffgas als das zweite Gas und/oder des Sauerstoffgases als zweites Gas von Verunreinigungen durch Wasserstoffgas als das erste Gas auf. Verunreinigungen des Wasserstoffgases durch Sauerstoffgas und des Sauerstoffgases durch Wasserstoffgas können insbesondere während eines Ruhezustands der Redox-Einheit 12a der Redox-Vorrichtung 10a eintreten, indem in den Gasräumen 54a, 56a und in den Reaktionszonen 50a, 51a verbleibende Restgase durch die Membran 38a der Redox-Einheit 12a diffundieren. Die Gasreinigungseinheit 20a umfasst eine Katalysatoreinheit 22a zu einer Katalyse einer Reaktion von Sauerstoffgas und Wasserstoffgas zu Wasser, die zwei Katalysatorelemente 26a, 28a aufweist, die teilweise aus einem Platinmetall bestehen. Die Katalysatorelemente 26a, 28a sind jeweils als eine auf einer der Reaktionszone 50a, 51a abgewandten Seite der Elektroden 42a, 44a der als alkalische Brennstoffzelle 16a ausgebildeten Redox-Einheit 12a aufgebrachte Katalysatorschicht ausgebildet. Die Katalysatorschicht besteht aus einer Platinschicht, an der Wasserstoff und Sauerstoff gebunden werden, wodurch eine Reaktion von Wasserstoff und Sauerstoff zu Wasser katalysiert wird. Anstelle einer Katalysatorschicht aus Platin kann auch eine Katalysatorschicht aus einem anderen Platinmetall, beispielsweise Palladium, Ruthenium oder Iridium, eingesetzt werden. Durch die Anordnung der Katalysatorelemente 26a, 28a jeweils auf der der Reaktionszone 50a, 51a abgewandten Seite der Elektroden 42a, 44a wird eine Reinigung von aus der Reaktionszone 50a, 51a austretenden und in die Gasräume 54a, 56a eintretenden Verunreinigungen durch Fremdgase erreicht. Somit wird eine Gefährdung der Brennstoffzelle 16a durch Knallgasbildung vermieden. Ferner wird eine durch eine Rekombination von Wasserstoff und Sauerstoff freiwerdende Reaktionsabwärme unmittelbar an den Elektroden 42a, 44a frei, die zu einer Heizung der Redox-Einheit 12a genutzt wird, wodurch ein Energieaufwand zur Heizung der Redox-Einheit 12a auf Betriebstemperatur verringert werden kann. In einem Verfahren zum Betrieb einer Redox-Vorrichtung 10a werden somit Gasströme 74a, 76a vor einem Verlassen der Gasräume 54a, 56a durch die Gasreinigungseinheit 20a gereinigt.

In den Figuren 2 bis 6 sind fünf weitere Ausführungsbeispiele gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figur 1 verwiesen werden kann. Zur Unterscheidung der Ausführungsbeispiele ist der Buchstabe a den Bezugszeichen des Ausführungsbeispiels in der Figur 1 nachgestellt. In den Ausführungsbeispielen der Figuren 2 bis 6 ist der Buchstabe a durch die Buchstaben b bis f ersetzt.

In Fig. 2 ist eine alternative Ausbildung einer Redox-Vorrichtung 10b mit einer Redox-Einheit 12b, die zur Durchführung einer Redoxreaktion unter Verbrauch und/oder Erzeugung eines von Wasserstoffgas gebildeten ersten Gases und eines von Sauerstoffgas gebildeten zweiten Gases vorgesehen ist, und mit einer Gasreinigungseinheit 20b zu einer Reinigung des Wasserstoffgases von Verunreinigungen durch Sauerstoffgas und des Sauerstoffgases von Verunreinigungen durch Wasserstoffgas, dargestellt. Die Redox-Einheit 12b ist als Elektrolyseur 18b zur Erzeugung von Wasserstoffgas und/oder Sauerstoffgas ausgebildet, der zu diesem Zweck Wasser elektrolytisch spaltet. Der Elektrolyseur 18b ist als alkalischer Elektrolyseur 18b ausgebildet. Ein Aufbau der Redox-Einheit 12b ist im Wesentlichen analog zu dem im vorherigen gezeigten Aufbau. Da zur Spaltung des Wassers Energie in Form elektrischen Stroms benötigt wird, ist in einem Stromkreis eine als Gleichspannungsquelle ausgebildete Stromquelle 36b angeordnet, die diesen Strom liefert. Das in einer Reaktionszone 50b in einem Kontaktbereich von einer Elektrode 42b und einer elektrolytgefüllten Membran 38b entstehende Wasserstoffgas tritt in einen Gasraum 54b ein und wird von dort in einem Gasstrom 70b über eine Leitung 62b in einen Gasspeicher 82b geführt. Entsprechend wird Sauerstoffgas, das in einer Reaktionszone 51 b in einem Kontaktbereich einer Elektrode 44b und der elektrolytgefüllten Membran 38b entsteht, über einen Gasraum 56b und eine Leitung 64b in einem Gasstrom 72b in einen Gasspeicher 84b geführt. Als Elektrolyt wird ebenfalls eine Kaliumhydroxidlösung verwendet. Die Gasreinigungseinheit 20b der Redox-Vorrichtung 10b umfasst ebenfalls eine Katalysatoreinheit 22b zu einer Katalyse einer Reaktion von Sauerstoffgas und Wasserstoffgas zu Wasser mit zwei Katalysatorelementen 26b, 28b, die teilweise aus einem Platinmetall bestehen. Die Katalysatorelemente 26b, 28b sind wie in dem obigen Beispiel jeweils als eine auf einer der Reaktionszone 50b, 51b abgewandten Seite der Elektroden 42b, 44b des Elektrolyseurs 18b aufgebrachte Katalysatorschicht aus Platin ausgebildet. In einem Verfahren zum Betrieb einer Redox-Vorrichtung 10b werden somit Gasströme 70b, 72b vor einem Verlassen der Gasräume 54b, 56b durch die Gasreinigungseinheit 20b gereinigt. Ferner wird eine durch eine Rekombination von Wasserstoff und Sauerstoff freiwerdende Reaktionsabwärme in den Gasräumen 54b, 56b frei, die zu einer Heizung der Redox-Einheit 12b genutzt wird, wodurch ein Energieaufwand zur Heizung der Redox-Einheit 12b auf Betriebstemperatur verringert werden kann.

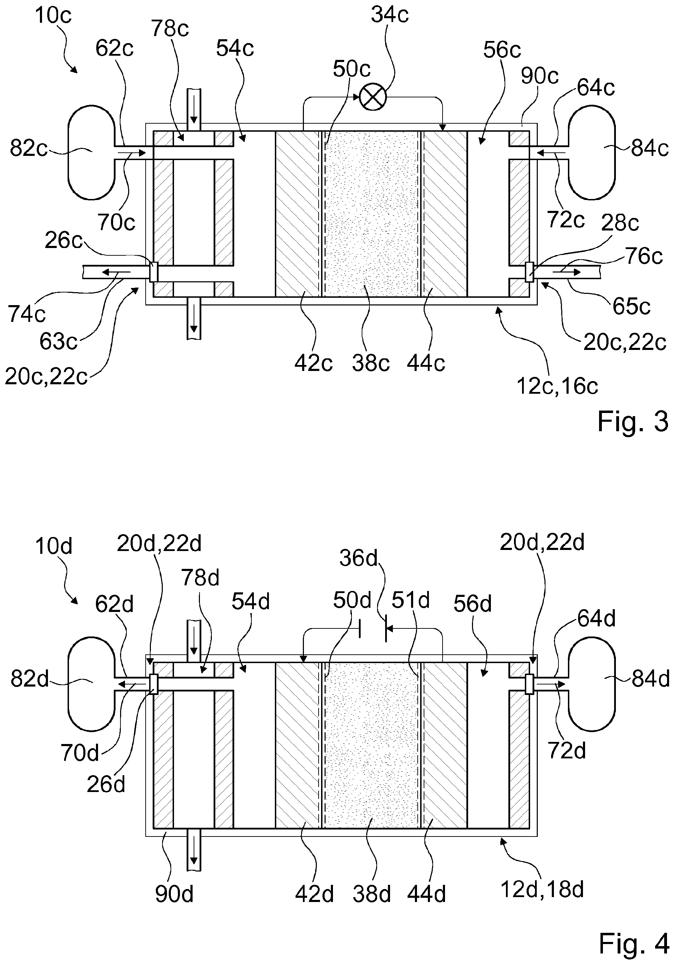

In einer weiteren Ausführung einer Redox-Vorrichtung 10c mit einer Redox-Einheit 12c, die zur Durchführung einer Redoxreaktion unter Verbrauch eines von Wasserstoffgas gebildeten ersten Gases und eines von Sauerstoffgas gebildeten zweiten Gases vorgesehen ist, und mit einer Gasreinigungseinheit 20c zu einer Reinigung des Wasserstoffgases von Verunreinigungen durch Sauerstoffgas und des Sauerstoffgases von Verunreinigungen durch Wasserstoffgas, ist die Redox-Einheit 12c wie im ersten Ausführungsbeispiel als Brennstoffzelle 16c, genauer als alkalische Brennstoffzelle 16c, ausgeführt (Fig. 3). Die Redox-Vorrichtung 10c unterscheidet sich von der im ersten Ausführungsbeispiel dargestellten durch eine Ausführung der Gasreinigungseinheit 20c. Die Gasreinigungseinheit 20c umfasst eine Katalysatoreinheit 22c zu einer Katalyse einer Reaktion von Sauerstoffgas und Wasserstoffgas zu Wasser, die zwei Katalysatorelemente 26c, 28c aufweist, die teilweise aus einem Platinmetall bestehen. Die Katalysatorelemente 26b, 28c weisen jeweils eine Hohlraumstruktur auf, die als eine Porenstruktur in einem Trägermaterial ausgeführt ist, wobei Oberflächen der Porenstruktur mit einer Katalysatorbeschichtung aus Platin oder einem anderen Platinmetall versehen sind. Bei einem Durchgang von Gas durch die Porenstruktur der Katalysatorelemente 26c, 28c wird eine hohe Reinigungseffizienz aufgrund einer großen katalytisch wirksamen Oberfläche durch die Porenstruktur erreicht. Die Katalysatorelemente 26c, 28c sind jeweils in Ausgängen von Gasräumen 54c, 56c zu Leitungen 63c, 65c angeordnet, die überschüssiges Wasserstoffgas und Sauerstoffgas in Gasströmen 74c, 76c aus den Gasräumen 54c, 56c ableiten. In einem Verfahren zum Betrieb der Redox-Vorrichtung 10c werden somit Gasströme 74c, 76c bei einem Verlassen der Gasräume 54c, 56c durch die Gasreinigungseinheit 20c gereinigt. In alternativen Ausbildungen der Gasreinigungseinheit 20c ist es beispielsweise denkbar, die Katalysatorelemente 26c, 28c mit Hohlraumstrukturen innerhalb der Gasräume 54c, 56c anzuordnen und in einem Verfahren zum Betrieb der Redox-Vorrichtung 10c Gasströme 74c, 76c vor einem Verlassen der Gasräume 54c, 56c durch die Gasreinigungseinheit 20c zu reinigen.

In einer weiteren Ausführung einer Redox-Vorrichtung 10d mit einer Redox-Einheit 12d, die zur Durchführung einer Redoxreaktion unter Erzeugung eines von Wasserstoffgas gebildeten ersten Gases und eines von Sauerstoffgas gebildeten zweiten Gases vorgesehen ist, ist die Redox-Einheit 12d wie im zweiten Ausführungsbeispiel als Elektrolyseur 18d, genauer als alkalischer Elektrolyseur 18d, zur Erzeugung von Wasserstoffgas und/oder Sauerstoffgas ausgebildet (Fig. 4). Die Redox-Vorrichtung 10d weist eine Gasreinigungseinheit 20d zu einer Reinigung des Wasserstoffgases von Verunreinigungen durch Sauerstoffgas und zur Reinigung des Sauerstoffgases von Verunreinigungen durch Wasserstoffgas auf, die eine Katalysatoreinheit 22d zu einer Katalyse einer Reaktion von Sauerstoffgas und Wasserstoffgas zu Wasser umfasst. Die Katalysatoreinheit 22d weist zwei teilweise aus einem Platinmetall bestehende Katalysatorelemente 26d, 28d auf, die wie im vorigen Ausführungsbeispiel als Hohlraumstrukturen mit platinbeschichteten Oberflächen ausgebildet sind. Die Katalysatorelemente 26d, 28d sind in Ausgängen von Gasräumen 54d, 56d zu Leitungen 62d, 64d, welche zu Gasspeichern 82d, 84d führen, so dass Gasströme 70d, 72d bei einem Verlassen der Redox-Einheit 12d mittels der Gasreinigungseinheit 20d gereinigt werden.

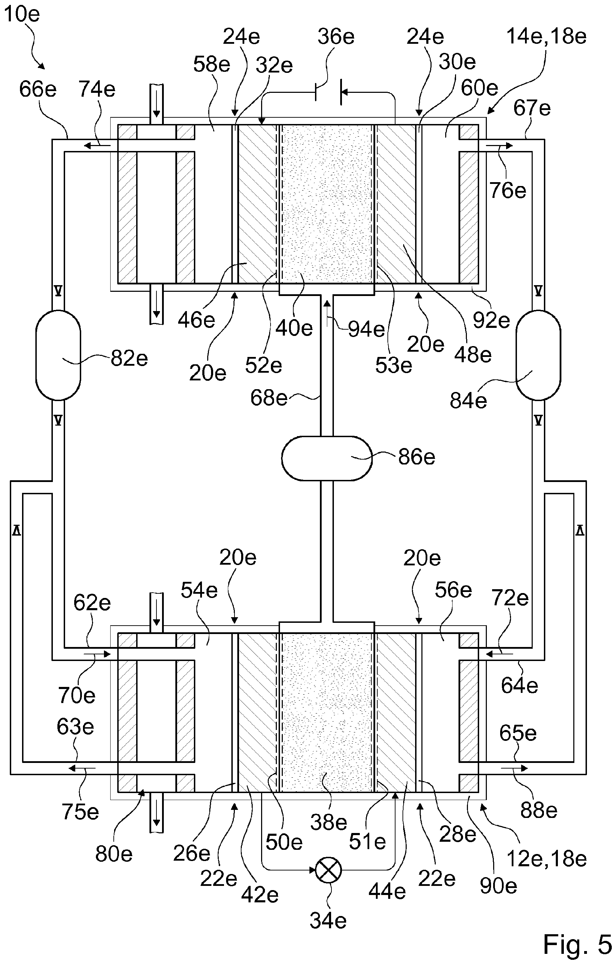

In einem Ausführungsbeispiel einer erfindungsgemäßen Redox-Vorrichtung 10e mit einer Redox-Einheit 12e, die zur Durchführung einer Redoxreaktion unter Verbrauch eines von Wasserstoffgas gebildeten ersten Gases und eines von Sauerstoffgas gebildeten zweiten Gases vorgesehen ist, umfasst die Redox-Vorrichtung 10e eine weitere Redox-Einheit 14e, die mit der Redox-Einheit 12e stofflich gekoppelt ist (Fig. 5). Die Redox-Einheit 12e und die weitere Redox-Einheit 14e sind als ein Brennstoffzellen-Elektrolyseur-Paar ausgebildet, wobei die Redox-Einheit 12e als eine alkalische Brennstoffzelle 16e und die Redox-Einheit 14e als alkalischer Elektrolyseur 18e ausgebildet ist. Die Redox-Vorrichtung 10e ist somit als ein regeneratives Brennstoffzellsystem ausgeführt, bei dem in dem Elektrolyseur 18e unter Energieaufwand erzeugtes Wasserstoffgas und Sauerstoffgas, das in Gasspeichern 82e, 84e gespeichert wird, in einem weiteren Betrieb in der Brennstoffzelle 16d unter Energieabgabe zu Wasser reagiert werden. Insbesondere ist in einem Verfahren zum Betrieb der erfindungsgemäßen Redox-Vorrichtung 10e vorgesehen, dass die Redox-Vorrichtung 10e geschlossen betrieben wird, weshalb eine Ergänzung eines Anfangsvorrats an Wasserstoffgas, Sauerstoffgas und Wasser, der in den Gasspeichern 82e, 84e und einem Wasserspeicher 86e sowie der Redox-Einheit 12e und der weiteren Redox-Einheit 14e nicht vorgenommen ist. Über einen abwechselnden Betrieb des Elektrolyseurs 18e und der alkalischen Brennstoffzelle 16e kann die Redox-Vorrichtung 10e eine Akkumulatorfunktion übernehmen.

Der als alkalischer Elektrolyseur 18e ausgebildeten weiteren Redox-Einheit 14e wird über eine Leitung 68a ein Wasserstrom 94e aus einem Wasserspeicher 86e zu einer Membran 40e zugeführt, die mit einer Kaliumhydroxid-Lösung gefüllt ist. In Reaktionszonen 52e, 53e, an denen die Membran 40e und Elektroden 46e, 48e aneinandergrenzen, werden Wasserstoffgas und Sauerstoffgas erzeugt. Das in der Reaktionszone 52e an der Elektrode 46e erzeugte Wasserstoffgas tritt durch die Elektrode 46e in einen Gasraum 58e des Elektrolyseurs 18e und wird in einem Gasstrom 74e über eine Leitung 66e in den Gasspeicher 82e abgeführt. Das in der Reaktionszone 53e an der Elektrode 48e erzeugte Wasserstoffgas tritt durch die Elektrode 46e in einen Gasraum 60e und wird in einem Gasstrom 76e über eine Leitung 67e in den Gasspeicher 84e abgeführt. Über eine Leitung 62e wird in einem Gasstrom 70e Wasserstoffgas aus dem Gasspeicher 82e in einen Gasraum 54e der als alkalische Brennstoffzelle 16e ausgebildeten Redox-Einheit 12e eingeführt und entsprechend Sauerstoffgas in einem Gasstrom 72e durch eine Leitung 64e in einen Gasraum 56e eingeführt. Überschüssiges Wasserstoffgas wird in einem Gasstrom 75e durch eine Leitung 63e der Brennstoffzelle 16e in einem Kreislauf wieder zugeführt, überschüssiges Sauerstoffgas wird in einem Gasstrom 88e durch eine Leitung 65e der Brennstoffzelle 16e in einem Kreislauf wieder zugeführt. Zu einer Regelung der Einleitungen und Ableitung von Gasen sind alle Leitungen 62e, 63e, 64e, 65e, 66e, 67e, 68e mit Ventilen ausgestattet. Über den Gasspeicher 82e und die Leitungen 62e, 63e, 66e sowie über den Gasspeicher 84e und die Leitungen 64e, 65e, 67e sind die Redox-Einheit 12e und die weitere Redox-Einheit 14e verbunden. Gasströme 70f, 74f und Gasströme 72f, 76f fließen von der weiteren Redox-Einheit 14e zu der Redox-Einheit 12e.

Sauerstoffgas und Wasserstoffgas werden in der Brennstoffzelle 16e auf bekannte Weise in einer Reaktionszone 50e an einer Elektrode 42e und einer Membran 38e und in einer Reaktionszone 51e an einer Elektrode 44e und der Membran 38e unter Energiegewinnung, die von einem Stromverbraucher 34e genutzt wird, zu Wasser reagiert. Die Redox-Einheit 12e weist eine Heizeinheit 80e auf, die weitere Redox-Einheit 14e einen Zellrahmen 92e.

Die erfindungsgemäße Redox-Vorrichtung 10e weist eine Gasreinigungseinheit 20e auf, die eine Katalysatoreinheit 22e, die in der Redox-Einheit 12e angeordnet ist, und eine Katalysatoreinheit 24e, die in der weiteren Redox-Einheit 14e angeordnet ist, umfasst. Die Katalysatoreinheit 22e weist zwei Katalysatorelemente 26e, 28e auf, die aus Platin bestehen und wie im ersten Ausführungsbeispiel als auf einer der Reaktionszone 50e, 51e abgewandten Seite der Elektroden 42e, 44e aufgebrachte Katalysatorschicht ausgebildet sind. Die Katalysatoreinheit 24e weist entsprechend zwei Katalysatorelemente 30e, 32e auf, die aus Platin bestehen und wie im zweiten Ausführungsbeispiel als auf einer der Reaktionszone 52e, 53e abgewandten Seite der Elektroden 46e, 48e aufgebrachte Katalysatorschicht ausgebildet sind. In einem Verfahren zu einem Betrieb der erfindungsgemäßen Redox-Vorrichtung 10e werden somit auf bereits beschriebene Weise Gasströme 70e, 72e, 74e, 76e von der als Elektrolyseur 18e ausgebildeten weiteren Redox-Einheit 14e zu der Redox-Einheit 12e vor einem Verlassen der weiteren Redox-Einheit 14e mittels der Gasreinigungseinheit 20e gereinigt. Ferner werden in dem Verfahren zu einem Betrieb der erfindungsgemäßen Redox-Vorrichtung 10e Gasströme 75e, 88e zu den Gasspeichern 82e, 84e vor einem Verlassen der Redox-Einheit 12e mittels der Gasreinigungseinheit 20e gereinigt.

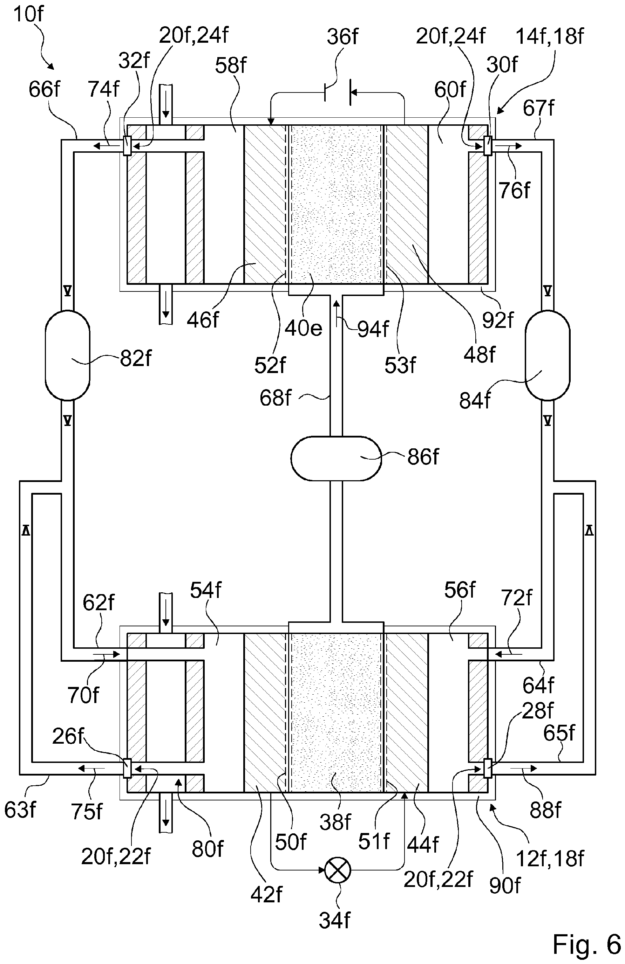

In Fig. 6 ist eine weitere alternative erfindungsgemäße Redox-Vorrichtung 10f mit einer Redox-Einheit 12f, die zur Durchführung einer Redoxreaktion unter Verbrauch eines von Wasserstoffgas gebildeten ersten Gases und eines von Sauerstoffgas gebildeten zweiten Gases vorgesehen ist, einer weiteren Redox-Einheit 14f, die mit der Redox-Einheit 12f stofflich gekoppelt ist, und einer Gasreinigungseinheit 20f, die eine in der Redox-Einheit 12f angeordnete Katalysatoreinheit 22f und eine in der weiteren Redox-Einheit 14f angeordnete Katalysatoreinheit 24f umfasst, dargestellt. Die Redox-Einheit 12f und die weitere Redox-Einheit 14f sind als Brennstoffzellen-Elektrolyseur-Paar ausgebildet, wobei die Redox-Einheit 12f als eine alkalische Brennstoffzelle 16f und die Redox-Einheit 14f als Elektrolyseur 18f ausgebildet ist. Das gezeigte Ausführungsbeispiel unterscheidet sich von dem vorhergehenden in einer Ausführung von Katalysatorelementen 26f, 28f, 30f, 32f der Katalysatoreinheiten 22f, 24f, die jeweils eine Hohlraumstruktur mit platinbeschichteten Oberflächen aufweisen. Die Katalysatorelemente 26f, 28f der Katalysatoreinheit 22f sind in Ausgängen von Gasräumen 54f, 56f, 58f, 60f zu Leitungen 63f, 65f, 66f, 67f zu Gasspeichern 82f, 84f angeordnet. In einem Verfahren zum Betrieb der erfindungsgemäßen Redox-Vorrichtung 10f werden somit Gasströme 70f, 72f, 74f, 76f von der weiteren Redox-Einheit 14f zu der Redox-Einheit 12f bei einem Verlassen der weiteren Redox-Einheit 14f mittels der zumindest einen Gasreinigungseinheit 20f gereinigt. Ferner werden in einem Verfahren zum Betrieb der erfindungsgemäßen Redox-Vorrichtung 10f Gasströme 75f, 88f bei einem Verlassen der Redox-Einheit 12f mittels der Gasreinigungseinheit 20f gereinigt, wobei jeweils Wasserstoffgas in den Gasströmen 74f, 75f, und somit auch in dem Gasstrom 70f, von Verunreinigungen durch Sauerstoffgas und Sauerstoffgas in den Gasströmen 76f, 88f, und somit auch in dem Gasstrom 72f, von Verunreinigungen durch Wasserstoffgas gereinigt wird. Grundsätzlich können zu einer weiteren Erhöhung der Betriebssicherheit in weiteren alternativen Ausführungsformen auch in Leitungen 62f, 64f oder an Eingängen der Leitungen 62f, 64f zu Gasräumen 54f, 56f Katalysatorelemente 26f, 28f angeordnet sein oder auf Elektroden 42f, 44f, 46f, 48f auf Reaktionszonen 50f, 51f, 52f, 53f abgewandten Seiten Katalysatorschichten aufgetragen sein.

### Bezugszeichen

- 10: Redox-Vorrichtung
- 12: Redox-Einheit
- 14: Redox-Einheit
- 16: Brennstoffzelle
- 18: Elektrolyseur
- 20: Gasreinigungseinheit
- 22: Katalysatoreinheit
- 24: Katalysatoreinheit
- 26: Katalysatorelement
- 28: Katalysatorelement
- 30: Katalysatorelement
- 32: Katalysatorelement
- 34: Stromverbraucher
- 36: Stromquelle
- 38: Membran
- 40: Membran
- 42: Elektrode
- 44: Elektrode
- 46: Elektrode
- 48: Elektrode
- 50: Reaktionszone
- 51: Reaktionszone
- 52: Reaktionszone
- 53: Reaktionszone
- 54: Gasraum
- 56: Gasraum
- 58: Gasraum
- 60: Gasraum
- 62: Leitung
- 63: Leitung
- 64: Leitung
- 65: Leitung
- 66: Leitung
- 67: Leitung
- 68: Leitung
- 70: Gasstrom
- 72: Gasstrom
- 74: Gasstrom
- 75: Gasstrom
- 76: Gasstrom
- 78: Heizeinheit
- 80: Heizeinheit
- 82: Gasspeicher
- 84: Gasspeicher
- 86: Wasserspeicher
- 88: Gasstrom
- 90: Zellrahmen
- 92: Zellrahmen
- 94: Wasserstrom

## Patentansprüche

1. Redox-Vorrichtung, insbesondere Wasserstoff-Sauerstoff-Redox-Vorrichtung, mit zumindest einer Redox-Einheit (12e-f, 14e-f), die zur Durchführung zumindest einer Redoxreaktion unter Verbrauch und/oder Erzeugung von einem ersten Gas, insbesondere von Wasserstoffgas, und/oder von einem zweiten Gas, insbesondere von Sauerstoffgas, vorgesehen ist, mit zumindest einer Gasreinigungseinheit (20e-f) zu einer Reinigung des ersten Gases von Verunreinigungen durch das zweite Gas und des zweiten Gases von Verunreinigungen durch das erste Gas, die zumindest eine Katalysatoreinheit (22e-f, 24 e-f) mit zumindest einem Katalysatorelement (26e-f, 28e-f, 30e-f, 32e-f) aufweist, wobei das zumindest eine Katalysatorelement (26e,-28e, 30e, 32e) als eine auf einer einer Reaktionszone (50e, 51e, 52e, 53e) abgewandten Seite zumindest einer Elektrode (42e, 44e, 46e, 48e) der zumindest einen Redox-Einheit (12e; 14e) aufgebrachte Katalysatorschicht ausgebildet ist, **gekennzeichnet durch** zumindest eine weitere Redox-Einheit (14e-f), die mit der zumindest einen Redox-Einheit (12e-f) stofflich gekoppelt ist, wobei die zumindest eine Redox-Einheit (12e-f) und die zumindest eine weitere Redox-Einheit (14e-f) als ein Brennstoffzellen-Elektrolyseur-Paar ausgebildet sind.

2. Redox-Vorrichtung nach Anspruch 1 **dadurch gekennzeichnet, dass** die Brennstoffzelle (16e-f) als alkalische Brennstoffzelle (16a; 16c; 16e-f) ausgebildet ist.

3. Redox-Vorrichtung nach einem der vorhergehenden Ansprüche, **dadurch gekennzeichnet, dass** die zumindest eine Katalysatoreinheit (22e-f, 24 e-f) zu einer Katalyse einer Reaktion von Sauerstoffgas und Wasserstoffgas zu Wasser ausgebildet ist.

4. Redox-Vorrichtung nach Anspruch 3 **dadurch gekennzeichnet, dass** das zumindest eine Katalysatorelement (26e-f, 28e-f, 30e-f, 32e-f) zumindest teilweise aus einem Platinmetall besteht.

5. Redox-Vorrichtung nach einem der vorhergehenden Ansprüche, **dadurch gekennzeichnet, dass** das zumindest eine Katalysatorelement (26f,-28f, 30f, 32f) eine Hohlraumstruktur aufweist.

6. Verfahren zum Betrieb einer Redox-Vorrichtung (10e-f) nach Anspruch 1 **dadurch gekennzeichnet, dass** die Redox-Vorrichtung (10e-f) geschlossen betrieben wird.

7. Verfahren nach Anspruch 6 **dadurch gekennzeichnet, dass** zumindest ein Gasstrom (70e, 72e, 74e, 76e) von der zumindest einen Redox-Einheit (12e) zu der zumindest einen weiteren Redox-Einheit (14e) oder von der zumindest einen weiteren Redox-Einheit (14e) zu der zumindest einen Redox-Einheit (12e) vor einem Verlassen der zumindest einen Redox-Einheit (12e) oder der zumindest einen weiteren Redox-Einheit (14e) mittels der zumindest einen Gasreinigungseinheit (20e) gereinigt wird.

## Claims

1. Redox apparatus, in particular hydrogen-oxygen redox apparatus, with at least one redox unit (12e-f, 14e-f) which is provided to carry out at least one redox reaction consuming and/or generating a first gas, in particular hydrogen gas, and/or a second gas, in particular oxygen gas, with at least one gas purification unit (20e-f) for purifying the first gas from contaminations by the second gas and purifying the second gas from contaminations by the first gas, the gas purification unit (20e-f) featuring at least one catalyser unit (22e-f, 24e-f) with at least one catalyser element (26e-f, 28e-f, 30e-f, 32e-f), wherein the at least one catalyser element (26e, 28e, 30e, 32e) is implemented as a catalysing layer applied on a side of at least one electrode (42e, 44e, 46e, 48e) of the at least one redox unit (12e; 14e), which faces away from a reaction area (50e, 51e, 52e, 53e),
**characterised by** at least one further redox unit (14e-f), which is physically coupled with the at least one redox unit (12e-f), wherein the at least one redox unit (12e-f) and the at least one further redox unit (14e-f) are implemented as a fuel cell-electrolyser pair.

2. Redox apparatus according to claim 1, **characterised in that** the fuel cell (16e-f) is implemented as an alkaline fuel cell (16a; 16c; 16e-f).

3. Redox apparatus according to one of the preceding claims, **characterised in that** the at least one catalyser unit (22e-f, 24e-f) is implemented for catalysing a reaction of oxygen gas and hydrogen gas resulting in water.

4. Redox apparatus according to claim 3, **characterised in that** the at least one catalyser element (26e-f, 28e-f, 30e-f, 32e-f) is at least partly made of a platinum metal.

5. Redox apparatus according to one of the preceding claims, **characterised in that** the at least one catalyser element (26f, 28f, 30f, 32f) has a hollow-space structure.

6. Method for operating a redox apparatus (10e-f) according to claim 1, **characterised in that** the redox apparatus (10e-f) is operated in closed operation.

7. Method for operating a redox apparatus (10e-f) according to claim 6, **characterised in that** at least one gas flow (70e, 72e, 74e, 76e) from the at least one redox unit (12e) to the at least one further redox unit (14e) or from the at least one further redox unit (14e) to the at least one redox unit (12e) is purified by the at least one gas purification unit (20e) before leaving the at least one redox unit (12e) or the at least one further redox unit (14e).

## Revendications

1. Appareil redox, en particulier appareil redox hydrogène-oxygène, avec au moins une unité redox (12e-f, 14e-f) prévue à réaliser au moins une réaction redox en consommation et/ou génération d'un premier gaz, en particulier hydrogène gazeux, et/ou d'un deuxième gaz, en particulier oxygène gazeux, avec au moins une unité à purification de gaz (20e-f) pour purifier le premier gaz des contaminations par le deuxième gaz et pour purifier le deuxième gaz des contaminations par le premier gaz, l'unité à purification de gaz (20e-f) comportant au moins une unité catalyseur (22e-f, 24e-f) avec au moins un élément catalysant (26e-f, 28e-f, 30e-f, 32e-f), l'a moins un élément catalysant (26e, 28e, 30e, 32e) étant implémenté comme une couche catalysant appliquée sur un côté d'au moins une électrode (42e, 44e, 46e, 48e) de l'au moins une unité redox (12e ; 14e), lequel est détourné d'une zone réactif (50e, 51e, 52e, 53e),
**caractérisé par** au moins une autre unité redox (14e-f) couplée physiquement avec l'au moins un unité redox (12e-f), l'au moins une unité redox (12e-f) et l'au moins une autre unité redox (14e-f) étant implémentées comme une paire piles à combustible-électrolyseur.

2. Appareil redox selon la revendication 1, **caractérisé en ce que** la pile à combustible (16e-f) est implémentée comme pile à combustible alcaline (16a ; 16c ; 16e-f).

3. Appareil redox selon l'une quelconque des revendications précédentes, **caractérisé en ce que** l'au moins une unité catalyseur (22e-f, 24e-f) est implémentée pour catalyser une réaction d'oxygène gazeux et hydrogène gazeux résultant en eau.

4. Appareil redox selon la revendication 3, **caractérisé en ce que** l'au moins un élément catalysant (26e-f, 28e-f, 30e-f, 32e-f) consiste au moins partiellement d'un métal platineux.

5. Appareil redox selon l'une quelconque des revendications précédentes, **caractérisé en ce que** l'au moins un élément catalysant (26f, 28f, 30f, 32f) comporte une structure d'espaces creux.

6. Procédé pour fonctionnement d'un appareil redox (10e-f) selon la revendication 1, **caractérisé en ce que** l'appareil redox (10e-f) est opéré en opération fermée.

7. Procédé selon la revendication 6, **caractérisé en ce qu'**au moins un flux de gaz (70e, 72e, 74e, 76e) de l'au moins une unité redox (12e) à l'au moins une autre unité redox (14e), ou de l'au moins une autre unité redox (14e) à l'au moins une unité redox (12e) est purifié par le biais de l'au moins une unité à purification de gaz (20e) avant de sortir de l'au moins une unité redox (12e) ou de l'au moins une autre unité redox (14e).
